# EUROPÄISCHE PATENTANMELDUNG

(11) **EP 3 696 153 A1**
(43) Veröffentlichungstag der Anmeldung: **19.08.2020**
(21) Anmeldenummer: 20155770.9
(22) Anmeldetag: 06.02.2020
(51) Int. Cl.: C04B 28/04, C04B 111/40

(54) **ZEMENTMISCHUNG ZUR BILDUNG EINES ULTRAHOCHFESTEN LEICHTBETONS**

(30) Priorität: 14.02.2019 DE 102019103763
(71) Anmelder: Universität Kassel, 34125 Kassel (DE)
(72) Erfinder: Middendorf, Bernhard, 34379 Calden (DE); Wetzel, Alexander, 34302 Guxhagen (DE); Umbach, Cristin, 34119 Kassel (DE)
(74) Vertreter: Patentanwälte Walther Hinz Bayer PartGmbB

(57) **Zusammenfassung**

Gegenstand der Erfindung ist eine Betonmischung zur Bildung eines ultrahochfesten Betons mittels Zugabe von Wasser umfassend ein Haufwerk aus granularen Ausgangsstoffen, wobei die granularen Ausgangstoffe wenigstens Zement, ein Fließmittel, einen reaktiven Zusatzstoff, mindestens einen inerten Zusatzstoff, und mindestens eine Gesteinskörnung umfassen, wobei der inerte Zusatzstoff als ein leichter Zusatzstoff ausgebildet ist und/oder die Gesteinskörnung als eine leichte Gesteinskörnung ausgebildet ist, und dass die Bestandteile des Haufwerks der granularen Ausgangsstoffe in den relativen Mengen und/oder der Korngrößenverteilung derart zusammengesetzt sind, dass das Haufwerk der granularen Ausgangsstoffe eine maximale Packungsdichte aufweist.

## Beschreibung

Die vorliegende Erfindung betrifft eine Betonmischung zur Bildung eines ultrahochfesten Betons mittels Zugabe von Wasser umfassend ein Haufwerk aus granularen Ausgangsstoffen, wobei die granularen Ausgangstoffe wenigstens Zement, ein Fließmittel, einen reaktiven Zusatzstoff, mindestens einen inerten Zusatzstoff und mindestens eine Gesteinskörnung umfassen.

### STAND DER TECHNIK

Beton ist ein Baustoff, welcher als Dispersion unter Zugabe von Wasser zu einem Haufwerk von granularen Ausgangsstoffen angemischt wird, wobei die granularen Ausgangsstoffe wenigstens ein Bindemittel, üblicherweise Zement, und einen Zuschlagstoff, insbesondere Gesteinskörnung, umfassen. Der Zement erhärtet unter Hydratation mit dem Zugabewasser und bildet eine dauerhaft feste Matrix um die eingeschlossene Gesteinskörnung.

Ultrahochfester Beton zeichnet sich durch eine hohe Festigkeit und Dauerhaftigkeit aus. Zwar besteht derzeit in Deutschland dafür noch keine Norm hinsichtlich der Druckfestigkeitsklassen; normativ wird in DIN EN 206-1 und DIN 1045-2 Beton mit einer Zylinderdruckfestigkeit bis 100 N/mm² geregelt, daher kann Beton mit Zylinderdruckfestigkeiten > 130 N/mm² als ultrahochfester Beton bezeichnet werden.

Die hohen Festigkeiten des ultrahochfesten Betons und seine Dauerhaftigkeit gegen chemische und mechanische Belastungen resultieren insbesondere aus der hohen Dichtigkeit seines Gefüges. Diese hohe Dichtigkeit wird erzielt durch die Zugabe von feinen, reaktiven oder inerten Zusatzstoffen und die Wahl eines niedrigen Wasser/Zement Verhältnisses beim Anmischen.

Als reaktive Zusatzstoffe werden insbesondere silikatische Feinststäube mit Korngrößen im einstelligen Mikrometerbereich bis in den Nanometerbereich verwendet. Diese besetzen als Füllstoffe im Haufwerk der granularen Ausgangsstoffe die Hohlräume zwischen den Zementpartikeln, welche typischerweise eine Korngrößenverteilung zwischen einem Kleinstkorn von 0,1 µm und einem Größtkorn von 100 µm aufweisen. Neben diesem sogenannten Mikrofüllereffekt führt die Beimischung der feinen Silikastaubpartikel zu einer weiteren Festigkeitssteigerung des Betons über eine puzzolanische Reaktion mit dem bei der Zementhydratation entstehenden Calciumhydroxid unter Bildung von zusätzlichen, festigkeitssteigernden Calciumsilikathydraten. Ferner resultiert aus der Silikastaubbeimischung eine verbesserte Anbindung der Gesteinskörnung an die Zementmatrix, was in einem reduzierten Gehalt an Calciumhydroxid und Ettringit in der Kontaktzone begründet liegt.

Alternativ zu Silikastaub finden im Stand der Technik beispielsweise auch Alumosilikate, Metakaolin oder feinst aufgemahlene Zemente als reaktive Zusatzstoffe Verwendung.

Des Weiteren können Gesteinsmehle als inerte Zusatzstoffe eingesetzt werden. Diese weisen üblicherweise eine mittlere Korngröße knapp oberhalb derer des Zementkornes auf und dienen der Ausgestaltung der Sieblinie des Haufwerks der granularen Ausgangsstoffe. Definitionsgemäß werden Gesteinsmehle bis zu einer Größtkorngröße von 125 µm als inerte Füllstoffe bezeichnet, während gröbere Körnungen zu den Gesteinskörnungen gezählt werden.

Zur Herstellung von ultrahochfestem Beton wird ein im Vergleich zu Normalbeton reduzierter Gehalt an Zugabewasser eingesetzt, typischerweise wird ein Wasser/Zement Massenverhältnis von 0,2-0,3 verwendet. Dieser sogenannte Wasser/Zementwert liegt damit unter dem Wert von etwa 0,4, welcher zur vollständigen Hydratation des Zementes notwendig ist. Die festigkeitssteigernde Wirkung dieser Maßnahme liegt somit zum einen in der Abwesenheit von ungebundenem Wasser in der ausgehärteten Zementmatrix begründet, wodurch es hier nicht zur Bildung unerwünschter, die Dichtigkeit reduzierender Kapillarporen kommt. Des Weiteren bleibt ein Kern größerer Zementpartikel als unhydratisierter, hochfester Zementklinker erhalten, welcher einen optimalen Verbund zur umgebenden hydratisierten Zementmatrix aufweist.

Damit der ultrahochfeste Beton trotz des geringen Wasserzementwertes verarbeitbar, fließfähig und selbstverdichtend bleibt, ist im Stand der Technik die Zugabe eines Fließmittels, üblicherweise auf Basis von Polycarboxylatether gebräuchlich.

Zum Beispiel offenbart die EP 1 315 683 B1 einen ultrahochfesten Beton basierend auf einer Betonmischung aus Zement, Silika Zusatzstoff, Fließmittel und als Gesteinskörnung grobkörnigen Splitt aus silikatischem Sedimentgestein oder Granit sowie Sand. Des Weiteren sind Metallfasern zur Verbesserung der mechanischen Eigenschaften enthalten. Dieser ultrahochfeste Beton ist durch eine Zylinderdruckfestigkeit von mindestens 120 N/mm² und einer Rohdichte von etwa 2500 kg/m³ gekennzeichnet.

Ferner offenbart DE 10 2013 108 836 A1 einen ultrahochfesten Beton basierend auf einer Betonmischung aus Zement, Silikastaub und Quarzmehl als Zusatzstoffe, Fließmittel, Basaltsplitt als Gesteinskörnung sowie Polypropylen Mikrofasern. Dieser ultrahochfeste Beton ist durch eine Zylinderdruckfestigkeit von mindestens 140 N/mm² und eine Rohdichte von etwa 2600 kg/m³ gekennzeichnet.

Hinsichtlich der Rohdichte ist ultrahochfester Beton nach dem Stand der Technik somit als Normalbeton oder gar als Schwerbeton gemäß DIN EN 206 einzustufen. Dieses hohe spezifische Gewicht stellt einen wesentlichen Nachteil von ultrahochfestem Beton nach dem Stand der Technik dar, da das Gewicht sowohl für konstruktive Einsätze des Betons als auch für logistische Fragestellungen eine entscheidende Rolle spielt.

### OFFENBARUNG DER ERFINDUNG

Es ist daher die Aufgabe der vorliegenden Erfindung, eine Betonmischung zur Bildung eines ultrahochfesten Betons vorzuschlagen, welcher eine im Vergleich zum Stand der Technik signifikant verringerte Rohdichte aufweist, trotzdem aber eine Zylinderfestigkeit von mehr als 100 N/mm² bietet.

Diese Aufgabe wird ausgehend von einer Betonmischung gemäß dem Oberbegriff des Anspruchs 1 in Verbindung mit den kennzeichnenden Merkmalen gelöst. Vorteilhafte Weiterbildung der Erfindung sind in den abhängigen Ansprüchen angegeben.

Die Erfindung schließt die technische Lehre ein, dass der inerte Zusatzstoff als ein leichter Zusatzstoff ausgebildet ist und/oder die Gesteinskörnung als eine leichte Gesteinskörnung ausgebildet ist, und dass die Bestandteile des Haufwerks der granularen Ausgangsstoffe in den relativen Mengen und/oder der Korngrößenverteilung derart zusammengesetzt sind, dass das Haufwerk der granularen Ausgangsstoffe eine maximale Packungsdichte aufweist.

Der Grundgedanke der Erfindung besteht darin, eine signifikante Gewichtsersparnis durch den Ersatz der im Stand der Technik verwendeten, kompakten und schweren Zusatzstoffe und Gesteinskörnungen mit leichten Zusatzstoffen und Gesteinskörnungen zu erzielen, und den damit einhergehenden Festigkeitsverlust durch eine Optimierung der Packungsdichte des gesamten Haufwerks der granularen Ausgangsstoffe zu kompensieren. Das Ziel der Packungsdichteoptimierung besteht darin, die leichten Zusatzstoffen und Gesteinskörnungen im ultrahochfesten Beton vollständig in einer dichten Zementmatrix einzuschließen und dabei Koaleszenz zwischen den einzelnen Körnern der Leichtzuschlagstoffe zu verhindern, da perkolierende Gebiete von porösen Leichtzuschlagstoffen als festigkeitsmindernde, mechanische Schwachstellen anzusehen sind und ferner das Eindringen von Feuchtigkeit und chemischen Agenzien ermöglichen, wodurch die Dauerhaftigkeit des Betons verringert würde. Aufgrund der hohen Dichtigkeit des gesamten Gefüges ist ein Beton basierend auf einer erfindungsgemäßen Betonmischung besonders geeignet zur Kombination mit metallischen Bewehrungen, da deren Dauerhaftigkeit entscheidend von Verschleiß durch in den Beton eindringende, korrosiv wirkende Agenzien beeinflusst wird.

Zur Durchführung der Packungsdichteoptimierung kann einerseits eine Anpassung der Sieblinie des Haufwerks der granularen Ausgangsstoffe an formalisierte Kornverteilungskurven vorgenommen werden. Dementsprechende Ansätze sind beispielsweise in DIN 1045-2 in Form von Regelsieblinien für Gesteinskörnungen verankert.

Alternativ kann ein computergestütztes mathematisch-physikalisches Packungsdichteoptimierungsverfahren zur Bestimmung einer optimierten Sieblinie verwendet werden, basierend auf ein Verfahren nach Schwanda und Reschke (Schwanda, F.: Das rechnerische Verfahren zur Bestimmung des Hohlraumes und Zementleimanspruches von Zuschlägen und seine Bedeutung für den Spannbetonbau, Zement und Beton 37, 1966, S. 8-17; und Reschke, T.: Der Einfluss der Granulometrie der Feinstoffe auf die Gefügeentwicklung und die Festigkeit von Beton, Schriftreihe der Zementindustrie, Heft 62/2000, Bau+Technik Verlag, Düsseldorf 2001). Damit ist die quantitative Berechnung der maximal möglichen Packungsdichte sowie des zu erwartenden Hohlraumgehaltes im Haufwerk möglich.

In vorteilhafter Ausführungsform der erfindungsgemäßen Betonmischung umfasst der inerte Zusatzstoff Blähglas und/oder Perlit, und/oder die Gesteinskörnung umfasst Blähglas und/oder Blähton und/oder Perlit und/oder Bims. Diese werden jeweils als poröse Granulate eingesetzt und weisen Kornrohdichten ≤ 2,0 g/cm³ auf, typischerweise geringer als die Dichte von Wasser. Blähglas ist ein aufgeschäumtes Glas mit kleinen, gasgefüllten Poren, wobei die einzelnen Granalien typischerweise als Rundkörner vorliegen. Blähton besteht aus aufgebähten Tongranalien in Form von Rundkörnern mit geschlossenporigem Kern und gesinterter Oberfläche. Perlit bezeichnet ein Granulat aus alteriertem vulkanischem Glas, üblicherweise ein Aluminiumsilikat mit hohem Anteil von Siliziumdioxid. Bims besteht aus porösem glasigem Vulkangestein. Neben den genannten Zuschlagsstoffen können alternativ oder zusätzlich alle organischen und anorganischen Leichtzuschläge mit einer Kornrohdichte ≤ 2,0 g/cm³ eingesetzt werden.

Als reaktiver Zusatzstoff wird vorzugsweise Silikastaub verwendet. Es können aber auch andere hydraulisch und latent hydraulische Zusatzstoffe, wie beispielsweise Flugasche, Hüttenstandmehl oder gemahlener Trass verwendet werden. Als weitere inerte Zusatzstoffe können neben feingemahlenen Leichtzuschlägen, auch Füller wie Quarzmehl oder Kalksteinmehl zur Anwendung kommen.

Vorzugsweise ist die Korngrößenverteilung der granularen Ausgangsstoffe in erfindungsgemäßen Betonmischungen derart beschaffen, dass das Kleinstkorn des leichten Zusatzstoffes kleiner ist als das Größtkorn des Zementes. Durch diese Maßnahme werden die rheologischen Eigenschaften der durch Wasserzugabe frisch angemischten Dispersion hinsichtlich der Verarbeitbarkeit verbessert. Im Vergleich zu ultrahochfesten Betonmischungen nach dem Stand der Technik, welche im Frischbetonzustand eine klebrige Konsistenz aufweisen, weist die erfindungsgemäße Betonmischung eine deutlich verbesserte Verarbeitbarkeit auf. Es werden auch bei den erfindungsgemäßen Betonmischungen Fließmittel, welche vorzugsweise auf Basis von Polycarboxylatether sind, verwendet.

In einer vorteilhaften Zusammensetzung nimmt der Zement einen Volumenanteil an den granularen Ausgangsstoffen von 20-40%, vorzugsweise 33%, ein, der reaktive Zusatzstoff einen Volumenanteil von 5-15%, vorzugsweise 10%, der inerte Zusatzstoff einen Volumenanteil von 5-15%, vorzugsweise 10%, und die Gesteinskörnung einen Volumenanteil von 40-60%, vorzugsweise 47%.

Des Weiteren kann die erfindungsgemäße Betonmischung vorteilhaft bis zu 5 Vol.% Stahlfasern umfassen, vorzugsweise 1 Vol.%, wobei die Stahlfasern einen mittleren Durchmesser von 50-1000 µm, vorzugsweise 200 µm, und eine Länge von 5-50 mm aufweisen. Die Stahlfasern führen zu einer Erhöhung der Zugfestigkeit und Duktilität des Betons, woraus insbesondere ein verzögertes, quasi-duktiles Nachbruchverhalten im Versagensfall resultiert. Des Weiteren können zusätzlich oder alternativ auch Fasern auf Basis von Kunststoffen, Glas oder Carbon zum Einsatz kommen.

Ein ultrahochfester Beton basierend auf einer erfindungsgemäßen Betonmischung weist vorzugsweise eine Rohdichte von 800-2000 kg/m³ und eine Zylinderdruckfestigkeit von 100-200 N/mm² auf. Damit stellt dieser Beton eine neue Betonklasse/art dar, welche als ultrahochfester Leichtbeton bezeichnet werden kann.

Ein ultrahochfester Beton basierend auf einer erfindungsgemäßen Betonmischung findet vorzugsweise Verwendung zur Herstellung eines Spannbetonbauwerks, insbesondere einer Brückenkonstruktion. Da die unter hohen Zugspannungen stehenden Stähle der Spannglieder von Spannbetonbauteile besonders korrosionsempfindlich sind, ist die Kombination mit dem überaus dichten, und somit vor Korrosion schützenden, ultrahochfesten Beton besonders geeignet.

### BEVORZUGTE AUSFÜHRUNGSBEISPIELE DER ERFINDUNG

Weitere, die Erfindung verbessernde Maßnahmen werden nachstehend gemeinsam mit der Beschreibung von bevorzugten Ausführungsbeispielen der erfindungsgemäßen Betonmischung anhand der Figuren näher dargestellt. Es zeigt:
- Fig. 1:: Tabellarische Darstellung von Zusammensetzungen zur Bildung von ultrahochfestem Beton basierend auf erfindungsgemäßen Betonmischungen, und
- Fig. 2:: Sieblinien von granularen Ausgangsstoffen von erfindungsgemäßen Betonmischungen.

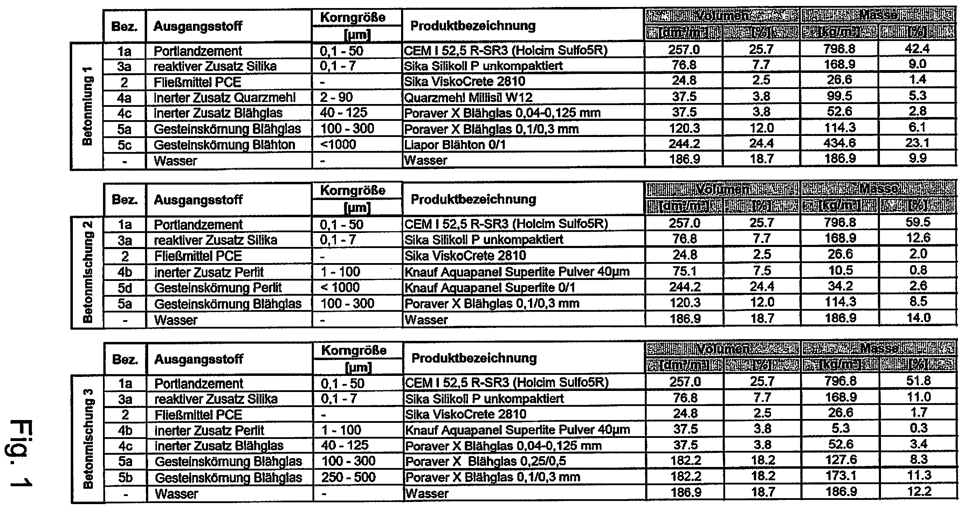

Fig. 1 zeigt die Zusammensetzung von drei bevorzugten Ausführungsbeispielen zur Bildung von ultrahochfestem Beton basierend auf erfindungsgemäßen Betonmischungen. Diese weisen alle einen Wasserzementwert von 0,23 auf und enthalten 26,6 kg/m³ Polycarboxylatether als Fließmittel. Die jeweiligen Rohdichten betragen 1930 kg/m³ (Betonmischung 1), 1913 kg/m³ (Betonmischung 2) und 1682 kg/m³ (Betonmischung 3). Die drei aus diesen Zusammensetzungen gebildeten ultrahochfesten Betone sind somit hinsichtlich ihrer Dichte als Leichtbetone gemäß DIN EN 206 anzusehen. Selbst bei Zugabe von 1 Vol.% Stahlfasern zur weiteren Verbesserung der mechanischen Eigenschaften des ultrahochfesten Betons verbleibt die Rohdichte unterhalb von 2000 kg/m³. Die Zylinderdruckfestigkeit aller drei Betone gemäß der Zusammensetzung in Fig. 1 beträgt mehr als 110 N/mm². Im Fall von Rezeptur 3 wurde eine Druckfestigkeit von 130 N/mm² erreicht. In Kombination mit der geringen Rohdichte ist somit eine Betonklasse mit herausragenden konstruktiven Eigenschaften geschaffen worden. Neben den Festbetoneigenschaften konnte zudem eine bessere Verarbeitbarkeit im Frischbetonzustand festgestellt werden, welcher nicht durch die klebrige Konsistenz von ultrahochfestem Beton nach dem Stand der Technik gekennzeichnet ist.

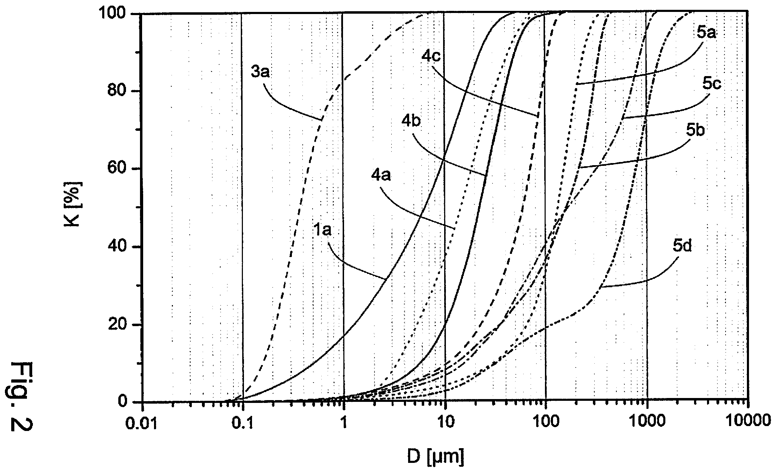

Fig. 2 zeigt die Sieblinien von granularen Ausgangsstoffen, d. h. Summenkurven der jeweiligen Kornfraktion K als Funktion des Korndurchmessers D. Dargestellt sind die in der tabellarischen Übersicht in Fig. 1 enthaltenen granularen Ausgangsstoffe der erfindungsgemäßen Betonmischungen: Portlandzement 1a, die Zusatzstoffe Silikastaub 3a und Quarzmehl 4a sowie die leichten Zusatzstoffe Blähglas 4c und Perlit 4b, die leichten Gesteinskörnungen mit unterschiedlichen Kornabstufungen von Blähglas 5a, 5b, Blähton 5c und Perlit 5d. Die erfindungsgemäße Packungsdichteoptimierung des Haufwerks der granularen Ausgangsstoffe berücksichtigt diese Korngrößenverteilungen sowie ihre relativen Mengen, so dass im daraus hergestellten Festbeton ein hochdichtes Gefüge mit optimaler Anbindung zwischen Zementmatrix und Leichtzuschlagstoffen vorliegt.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile können sowohl für sich als auch in den verschiedensten Kombinationen erfindungswesentlich sein.

### Bezugszeichenliste:

- 1: Zement
- 1a: Portlandzement
- 2: Fließmittel
- 3: reaktiver Zusatzstoff
- 3a: Silikastaub
- 4: inerter Zusatzstoff
- 4a: Quarzmehl
- 4b: Perlit feinkörnig
- 4c: Blähglas feinkörnig
- 5: Gesteinskörnung
- 5a, 5b: Blähglas grobkörnig
- 5c: Blähton
- 5d: Perlit grobkörnig
- K: Kornfraktion
- D: Korndurchmesser

## Patentansprüche

1. Betonmischung zur Bildung eines ultrahochfesten Betons mittels Zugabe von Wasser umfassend ein Haufwerk aus granularen Ausgangsstoffen, wobei die granularen Ausgangstoffe wenigstens Zement (1), ein Fließmittel (2), einen reaktiven Zusatzstoff (3), mindestens einen inerten Zusatzstoff (4) und mindestens eine Gesteinskörnung (5) umfassen,
**dadurch gekennzeichnet,**
**dass** der inerte Zusatzstoff (4) als ein leichter Zusatzstoff (4b, 4c) ausgebildet ist und/oder dass die Gesteinskörnung (5) als eine leichte Gesteinskörnung (5a, 5b, 5c, 5d) ausgebildet ist, und dass die Bestandteile des Haufwerks der granularen Ausgangsstoffe in den relativen Mengen und/oder der Korngrößenverteilung derart zusammengesetzt sind, dass das Haufwerk der granularen Ausgangsstoffe eine maximale Packungsdichte aufweist.

2. Betonmischung nach Anspruch 1,
**dadurch gekennzeichnet,**
**dass** der inerte Zusatzstoff (4) Blähglas (4b) und/oder Perlit (4c) umfasst, und/oder dass die Gesteinskörnung (5) Blähglas (5a, 5b) und/oder Blähton (5c) und/oder Perlit (5d) und/oder Bims umfasst.

3. Betonmischung nach Anspruch 1 oder 2,
**dadurch gekennzeichnet,**
**dass** das Kleinstkorn des inerten Zusatzstoffes (4) kleiner ist als das Größtkorn des Zementes (1).

4. Betonmischung nach einem der vorgenannten Ansprüche,
**dadurch gekennzeichnet,**
**dass** der Zement (1) einen Volumenanteil an den granularen Ausgangsstoffen von 20-40%, vorzugsweise 33%, einnimmt, und dass der reaktive Zusatzstoff (3) einen Volumenanteil an den granularen Ausgangsstoffen von 5-15%, vorzugsweise 10%, einnimmt, und dass der inerte Zusatzstoff (4) einen Volumenanteil an den granularen Ausgangsstoffen von 5-15%, vorzugsweise 10% einnimmt, und dass die Gesteinskörnung (5) einen Volumenanteil an den granularen Ausgangsstoffen von 40-60%, vorzugsweise 47%, einnimmt.

5. Betonmischung nach einem der vorgenannten Ansprüche,
**dadurch gekennzeichnet,**
**dass** die Betonmischung bis zu 5 Vol.% Stahlfasern, vorzugsweise 1 Vol.%, umfasst, wobei die Stahlfasern einen mittleren Durchmesser von 50-1000 µm, vorzugsweise 200 µm, und eine Länge von 5-50 mm aufweisen.

6. Ultrahochfester Beton basierend auf einer Betonmischung nach einem der vorgenannten Ansprüche,
**dadurch gekennzeichnet,**
**dass** der Beton eine Rohdichte von 800-2000 kg/m³ und eine Zylinderdruckfestigkeit von 100-200 N/mm² aufweist.

7. Ultrahochfester Beton basierend auf Ausgangsstoffen, welche eine Betonmischung nach einem der Ansprüche 1 bis 5 aufweisen,
**dadurch gekennzeichnet,**
**dass** die Ausgangsstoffe umfassen:
• 25,7 Vol.% Portlandzement (1a) mit einer Korngrößenverteilung von 0,1-50 µm,
• 2,5 Vol.% Fließmittel (2) aus Polycarboxylatether,
• 7,7 Vol.% reaktiven Zusatzstoff (3) aus Silikastaub (3a) mit einer Korngrößenverteilung von 0,1-7 µm,
• 3,8 Vol.% inerten Zusatzstoff (4) aus Quarzmehl (4a) mit einer Korngrößenverteilung von 2-90 µm,
• 3,8 Vol.% inerten Zusatzstoff (4) aus Blähglas (4c) mit einer Korngrößenverteilung von 40-125 µm
• 12 Vol.% leichte Gesteinskörnung (5) aus Blähglas (5a) mit einer Korngrößenverteilung von 100-300 µm,
• 24,4 Vol.% leichte Gesteinskörnung (5) aus Blähton (5c) mit einer Größtkorngröße kleiner als 1 mm, und
• 18,7 Vol.% Wasser

8. Ultrahochfester Beton basierend auf Ausgangsstoffen, welche eine Betonmischung nach einem der Ansprüche 1 bis 5 aufweisen,
**dadurch gekennzeichnet,**
**dass** die Ausgangsstoffe umfassen:
• 25,7 Vol.% Portlandzement (1a) mit einer Korngrößenverteilung von 0,1-50 µm,
• 2,5 Vol.% Fließmittel (2) aus Polycarboxylatether,
• 7,7 Vol.% reaktiven Zusatzstoff (3) aus Silika (3a) mit einer Korngrößenverteilung von 0,1-7 µm,
• 7,5 Vol.% inerten Zusatzstoff (4) aus Perlit (4b) mit einer Korngrößenverteilung von 1-100 µm,
• 24,4 Vol.% leichte Gesteinskörnung (5) aus Perlit (5d) mit einer Größtkorngröße kleiner als 1 mm,
• 12 Vol.% leichte Gesteinskörnung (5) aus Blähglas (5a) mit einer Korngrößenverteilung von 100-300 µm, und
• 18,7 Vol.% Wasser

9. Ultrahochfester Beton basierend auf einer Betonmischung nach einem der Ansprüche 1 bis 5,
**dadurch gekennzeichnet,**
**dass** der Beton umfasst:
• 25,7 Vol.% Portlandzement (1a) mit einer Korngrößenverteilung von 0,1-50 µm,
• 2,5 Vol.% Fließmittel (2) aus Polycarboxylatether,
• 7,7 Vol.% reaktiven Zusatzstoff (3) aus Silika (3a) mit einer Korngrößenverteilung von 0,1-7 µm,
• 3,8 Vol.% inerten Zusatzstoff (4) aus Blähglas (4c) mit einer Korngrößenverteilung von 40-125 µm,
• 3,8 Vol.% inerten Zusatzstoff (4) aus Perlit (4b) mit einer Korngrößenverteilung von 1-100 µm,
• 18,2 Vol.% leichte Gesteinskörnung (5) aus Blähglas (5a) mit einer Korngrößenverteilung von 100-300 µm,
• 18,2 Vol.% leichte Gesteinskörnung (5) aus Blähglas (5b) mit einer Korngrößenverteilung von 250-500 µm, und
• 18,7 Vol.% Wasser

10. Verwendung einer Betonmischung nach einem der Ansprüche 1 bis 5 oder eines Betons nach einem der Ansprüche 6 bis 9 zur Herstellung eines Betonbauwerks, insbesondere eines Spannbetonbauwerks, oder eines Betonbauteils.
